# Europäisches Patentamt
# European Patent Office
# Office européen des brevets

(19)

(11) Veröffentlichungsnummer: **0 089 010**
**B1**

(12) # EUROPÄISCHE PATENTSCHRIFT

(45) Veröffentlichungstag der Patentschrift:
**15.10.86**

(51) Int. Cl.⁴: **C 01 B 33/02**

(21) Anmeldenummer: **83102341.1**

(22) Anmeldetag: **10.03.83**

(54) **Semikontinuierliches Verfahren zur Herstellung von reinem Silicium.**

(30) Priorität: **11.03.82 DE 3208878**

(43) Veröffentlichungstag der Anmeldung:
**21.09.83 Patentblatt 83/38**

(45) Bekanntmachung des Hinweises auf die Patenterteilung:
**15.10.86 Patentblatt 86/42**

(84) Benannte Vertragsstaaten:
**AT BE CH DE FR GB IT LI NL SE**

(56) Entgegenhaltungen:
**EP-A-0 024 614**
**EP-A-0 029 182**
**DE-B-2 706 175**
**DE-C-1 022 806**
**US-A-3 871 872**

(73) Patentinhaber: **HELIOTRONIC Forschungs- und Entwicklungsgesellschaft für Solarzellen-Grundstoffe mbH, Johannes- Hess- Strasse 24, D-8263 Burghausen (DE)**

(72) Erfinder: **Dietl, Josef, Dr.. Dipl.- Phys., Am Bärenbach 17, D-8262 Neuötting (DE)**
Erfinder: **Holm, Claus, Dr., Dipl.- Chem., Lohbergstrasse 65, D-8261 Teisin (DE)**
Erfinder: **Kotilge, Jörg, Dipl.- Ing., Robert- Koch- Strasse 73, D-8263 Burghausen (DE)**
Erfinder: **Wohlschläger, Michael, Pfefferminzstrasse 44, D-8031 Eichenau (DE)**

### Beschreibung

Gegenstand der Erfindung ist ein semikontinuierliches Verfahren zur Herstellung von reinem Silicium durch Reduktion von Quarz mit Aluminium.

Silicium ist als Grundmaterial für billige terrestrische Solarzellen derzeit immer noch viel zu teuer. Ein wesentlicher Grund für den hohen Preis ist der bisher übliche aufwendige Reinigungsprozeß, nach dem durch Reduktion von Quarz mit Kohle zunächst erhaltenes Rohsilicium durch Einwirkung von Chlorwasserstoff in Trichlorsilan umgewandelt wird. Dieses läßt sich destillativ reinigen und schließlich in Gegenwart von Wasserstoff zu hochreinem polykristallinem Silicium zersetzen. Das so erhaltene Silicium genügt dann selbst den strengen Reinheitsanforderungen für elektronische Bauelemente. Eine derart hohe Reinheit ist jedoch für Silicium als Solarzellengrundmaterial nicht erforderlich, besonders wenn polykristallines Silicium mit Verunreinigungen getternden Korngrenzen verwendet wird. So hat es nicht an Versuchen gefehlt, den klassischen Reinigungsprozeß durch ein kostengünstigeres Verfahren zu ersetzen.

Das von K.A. Kühne im Chemischen Zentralblatt 75, Seite 64, Nr. 14 78 71 (1904) erstmals beschriebene, sogenannte "Schwefel-Thermit-Verfahren", eine Umsetzung eines Gemisches aus Aluminiumpulver, Schwefel und Quarz, liefert auch in einer von H.V. Wartenberg verbesserten Version lediglich eine Siliciumausbeute von 50 % der Theorie. Nach Reinigung "durch Schmelzen in Siliciumtetrachlorid" verbleibt noch ein Gehalt von 0,1 % Metallverunreinigungen, der die Brauchbarkeit des Materials auch nach Meinung des Herstellers vermindert (Z. anorg. Chemie 286, 247 - 253 (1956)).

Gemäß einem neueren Verfahren kann Quarz in Gegenwart einer Aluminiumsulfidschlacke durch Aluminium zu elementarem Silicium reduziert werden. Das Aluminium wirkt dabei zugleich als Reduktionsmittel für den Quarz und als Lösungsmittel für das entstandene Silicium, das anschließend in bereits sehr reiner Form durch Abkühlen aus der Lösung auskristallisiert werden kann. Allerdings hat dieses Verfahren einen hohen Aluminiumbedarf und erfordert wegen Geruch und Giftigkeit des Aluminiumsulfids zusätzliche Schutzmaßnahmen, vgl. EP-A-29 182.

Der Erfindung lag daher die Aufgabe zugrunde, ein großtechnisch einsetzbares Verfahren anzugeben, das ausgehend von Quarz die Herstellung von reinem Silicium für Solarzellen unter Vermeidung der kostspieligen Gasphasenabscheidung gestattet, ohne die Nachteile der bisher bekannten Verfahren aufzuweisen.

Gelöst wird diese Aufgabe durch ein Verfahren, welches dadurch gekennzeichnet ist, daß in einem Reaktionsgefäß eine schmelzflüssige Erdalkalisilikatschlacke vorgelegt wird, daß in diese Schlacke chargenweise Quarz und Aluminium eingebracht werden, daß das entstandene, sich von der Schlacke getrennt abscheidende Silicium portionsweise aus dem Reaktionsgefäß abgezogen wird und daß zur Regenerierung der das entstandene Aluminiumoxid gelöst enthaltenden Schlacke Aluminiumoxid-armes Schlackenmaterial nachchargiert und eine entsprechende Menge der mit Aluminiumoxid angereicherten Schlacke aus dem Reaktionsgefäß abgeführt wird.

Ein besonderer Vorteil des erfindungsgemäßen Verfahrens gegenüber dem klassischen Lichtbogenverfahren besteht darin, daß nicht unbedingt stückiger Quarz eingesetzt werden muß, sondern daß sich vorteilhaft sogar Quarzsande, bevorzugt in Korngrößen von 0,1 bis 5 mm, verwenden lassen. Stark verunreinigte Quarzsande werden, obwohl sie grundsätzlich auch direkt eingesetzt werden können, zweckmäßig auf eine Reinheit von günstigerweise mindestens 98 Gew.% Quarzanteil vorgereinigt, um eine vorzeitige Überlastung der im Verfahren eingesetzten Schlacke zu vermeiden. Vorteilhafter wird jedoch auf die in großen Mengen vorhandenen Quarzsande mit Reinheiten von über 99,9 % zurückgegriffen. Auch zahlreiche Silikate, wie etwa Kaolinite, verschiedene Glimmervarianten, Feldspäte oder Schichtsilikate, sind nach geeigneter chemischer und physikalischer Aufbereitung zu Siliciumdioxidpulver als Ausgangsmaterial geeignet.

Das als Reduktionsmittel dienende Aluminium wird zweckmäßig bereits in möglichst reiner Form eingesetzt, um ein Einschleppen zusätzlicher Verunreinigungen zu vermeiden. Besonders bewährt hat sich die Verwendung von elektrolytisch gereinigtem Aluminium mit mindestens 99,9 % Reinheit. Handelt es sich bei den Verunreinigungen um Stoffe, die sich vor allem in der Schlacke anreichern, können sogar niedrigere Reinheitsgrade des Aluminiums in Kauf genommen werden. Hingegen ist in Bezug auf Verunreinigungen, die sich nur geringfügig in der Schlacke lösen, wie beispielsweise Eisen oder Phosphor, von Anfang an auf größtmögliche Reinheit zu achten.

Als am besten geeignetes Grundmaterial für die als Reaktions- und Extraktionsmedium dienende Schlacke haben sich Silikate der Erdalkalimetalle Magnesium, Calcium, Strontium, Barium erwiesen, die sowohl in reiner Form, als auch als Mischungen aus zwei oder mehr Komponenten eingesetzt werden können. Als Grundmaterial für eine besonders kostengünstige Schlacke empfiehlt sich beispielsweise billiges Calciumsilikat, dem dann andere Silikate, wie etwa Magnesiumsilikat, zugeschlagen werden können. Hingegen ist beispielsweise das besonders rein erhältliche Bariumsilikat, insbesondere für eine sehr reine Schlacke geeignet. Günstige Ergebnisse lassen sich auch erzielen, wenn der Schlacke bis zu 30 Mol% Erdalkalifluoride oder andere, die Löslichkeit des entstehenden Aluminiumoxids in der Schlacke steigernde, Stoffe zugesetzt werden.

Nach dem erfindungsgemäßen Verfahren wird in einem vorzugsweise aus Graphit oder Kohlestampfmasse bestehenden Reaktionsgefäß zunächst die Erdalkalisilikatschlacke vorgelegt. Sie kann dabei in einem gesonderten Gefäß aufbereitet und dann in bereits schmelzflüssiger Form zugesetzt werden, kann aber auch erst im beispielsweise induktiv beheizten Reaktionsgefäß auf die bevorzugte Reaktionstemperatur von 1420 bis 1600 °C gebracht werden. Dieser Temperaturbereich ist besonders günstig, da dann das erzeugte Silicium in schmelzflüssiger Form anfällt und andererseits Nebenreaktionen, wie z.B. SiO-Bildung und Abdampfen flüchtiger Schlackenbestandteile noch nicht stören. Grundsätzlich ist aber auch die Wahl höherer Reaktionstemperaturen möglich.

Die vorgelegte Schlackenmenge wird zweckmäßig so groß gewählt, daß das im ersten Reaktionszyklus entstehende Aluminiumoxid vollständig darin gelöst wird. Besonders vorteilhaft ist es, wenn die Schmelztemperatur der sich bildenden Mischung aus Schlacke und Aluminiumoxid stets in dem oben angegebenen Temperaturintervall verbleibt, so daß ein Festwerden der Schlacke vermieden wird und somit immer in einen flüssigen Sumpf zuchargiert werden kann. Die entsprechenden Mengenverhältnisse und Schmelztemperaturen lassen sich den zugehörigen Phasendiagrammen entnehmen (vgl. z.B. "Phase Diagrams for Ceramists, The American Ceramic Society, Inc., Band 1 (1964), Band 2 (1969), Band 3 (1975)).

Der auf Arbeitstemperatur befindlichen, schmelzflüssigen Schlacke wird nun das Reaktionsgut zuchargiert. Besonders gute Ergebnisse werden dabei erzielt, wenn Quarz und Aluminium in annähernd oder genau stöchiometrischem Verhältnis vorgemischt und portionsweise in die Schlacke eingearbeitet werden. Zweckmäßig ist darauf zu achten, daß Quarz und Aluminium in einem Molverhältnis von mindestens 3 : 4 vorliegen. Während nämlich ein geringer Unterschuß an Aluminium keine nachteiligen Auswirkungen hat, da der dann verbleibende nicht umgesetzte Quarz sich in der Schlacke löst, kann ein Überschuß an Aluminium zu einem wegen der Silicidbildung ungünstigen reduktiven Angriff des Aluminiums auf die Schlacke führen, wenn der gesamte Quarz aufgebraucht ist. Wird ferner unter Luftzutritt gearbeitet, so kann überschüssiges Aluminium vom Luftsauerstoff zu Aluminiumoxid aufoxidiert werden und geht somit als Reduktionsmittel verloren.

Da das Reaktionsgut in der besonders günstigen Ausführungsform der Erfindung bereits außerhalb des Reaktionsgefäßes im geeigneten Mengenverhältnis eingewogen und durchgemischt wird, kann beim anschließenden portionsweisen Einbringen des Reaktionsgutes im Grunde sogar auf Rühren verzichtet werden. Trotzdem läßt sich durch die Verwendung eines geeigneten Rührers, beispielsweise eines Flügelrührers aus Kohlenstoff oder Graphit die Auflösung des Reaktionsgutes in der Schlacke verbessern. Eine besonders gute Rührwirkung läßt sich auch durch eine vorzugsweise vertikal durch die Reaktionsmischung bewegte, durchlöcherte Platte aus beispielsweise Graphit erzielen.

Wegen der Exothermie der Reduktionsreaktion von Quarz mit Aluminium braucht das Reaktionsgefäß nur während der Anfahrphase, also während des Niederschmelzens der Schlacke und zu Beginn der Reaktion, vollständig extern beheizt zu werden. Wenn jedoch die Reaktion einmal angelaufen ist, so kann durch die Geschwindigkeit des Nachchargierens und die Intensität des Rührens der Temperaturverlauf so gestaltet werden, daß die externe Beheizung weitgehend vermindert werden kann. Erst beim Abklingen der Reaktion muß wieder stärker beheizt werden, um ein Absinken der Temperatur unter den Schmelzpunkt der Reaktanten und damit ein Festwerden der Reaktionsmischung zu verhindern.

Wenn die nach und nach zuchargierte Menge des Reaktionsgutes vollständig abreagiert hat, was beispielsweise durch im Reaktionsgefäß vorgesehene Thermoelemente am Absinken der Reaktionstemperatur verfolgt werden kann, wird dem System Zeit gelassen, sich zu entmischen. Während dieser sogenannten Beruhigungsphase wird der Rührer angehalten und ggf. aus der Reaktionsmischung ausgefahren, so daß sich aufgrund der Dichteverhältnisse die Schlacke unten im Reaktionsgefäß abzusetzen beginnt. Das gebildete Silicium sammelt sich auf der Oberfläche der Schlacke, wobei es stets durch eine dünne Schlackenschicht von der Wandung des Reaktionsgefäßes getrennt bleibt. Ein besonderer Vorteil ist in diesem Zusammenhang, daß die an der Oberfläche des gebildeten Siliciums durch Reaktion mit der vorliegenden Atmosphäre, beispielsweise Luftsauerstoff, entstehenden Oxide der Verunreinigungen in der umgebenden Schlacke ausgezeichnet gelöst werden. Aus diesem Grunde ist es nicht unbedingt nötig, das erfindungsgemäße Verfahren unter Vakuum oder Schutzgas in einem geschlossenen System durchzuführen. Besonders gute Ergebnisse werden sogar in einem offenen System unter Luftzutritt erzielt.

Wenn die Trennung der Schlacke vom Silicium abgeschlossen und damit die Beruhigungsphase beendet ist, wird das gebildete Silicium aus dem Reaktionsgefäß abgezogen. Dies kann beispielsweise durch ein Ablaufsystem, wie etwa ein von unten oder seitlich in das schmelzflüssige Silicium hineinreichendes, z.B. aus Graphit · gefertigtes Ablaufrohr geschehen. Eine andere elegante Möglichkeit besteht darin, ein geeignetes Rohr aus beispielsweise Graphit in der Regel von oben in das abzuziehende Silicium einzuführen und durch Anlegen von Vakuum das Silicium in ein anderes Behältnis abzusaugen, wo es dann z.B. einer gerichteten Erstarrung oder einer Vakuumausdampfung unterworfen werden kann. Das nach dem erfindungsgemäßen Verfahren erhaltene Silicium stellt aufgrund seiner hohen Reinheit ein besonders gut zur Weiterverarbeitung zu Solarzellen geeignetes Grundmaterial dar.

Mit dem Abziehen des entstandenen Siliciums aus dem Reaktionsgefäß ist der Einfahrvorgang abgeschlossen und die Anlage steht für den eigentlichen semikontinuierlichen Betriebszyklus zur Verfügung. Nun wird in die vorhandene schmelzflüssige und das entstandene Aluminiumoxid gelöst enthaltende Schlacke ein weiterer Anteil der Reaktionsmischung aus Quarz und Aluminium zugefügt. Um die Schlacke jedoch für das entstehende Aluminiumoxid aufnahmefähig zu halten, muß sie durch den Zusatz von frischem Schlackenmaterial regeneriert werden. Zu diesem Zweck wird eine entsprechende Menge Schlackenmaterials, die entweder kein oder nur einen geringen Anteil von Aluminiumoxid enthält, in das Reaktionsgefäß zuchargiert. Dabei können die gemischten Einzelkomponenten, im Fall einer Calciumsilikatschlacke also beispielsweise Calciumoxid und Siliciumdioxid, aber auch die entsprechende Verbindung, also beispielsweise Calciumsilikat oder Mischungen aus Calciumsilikat, Calciumoxid und Siliciumdioxid zweckmäßig zusammen mit der Reaktionsmischung, aber auch getrennt davon zugegeben werden.

Eine etwa dem frischen Schlackenzusatz entsprechende Menge an verbrauchter Schlacke wird aus dem Reaktionsgefäß abgeführt. Dies wird in besonders einfacher Weise dadurch erreicht, daß in dem Reaktionsgefäß ein Ablaufsystem vorgesehen ist, das bei einer besonderen Ausführungsform der Erfindung beispielsweise nach dem Siphonprinzip arbeiten kann. Dazu ist in dem Reaktionsgefäß eine von oben nach unten in die Schmelze hineinragende, bevorzugt aus Graphit bestehende Trennwand vorgesehen, die über dem Boden des Reaktionsgefäßes eine in der Regel als Spalt ausgebildete Öffnung freiläßt, um die Schlacke durchfließen zu lassen. Somit kann sich auf beiden Seiten der Trennwand ein gleichhoher Schlackenspiegel einstellen. In diesem Zusammenhang hat es sich bewährt, die Spalthöhe so gering, beispielsweise 5 mm, zu wählen, daß aufgrund der Benetzungsverhältnisse nur Schlacke, nicht jedoch Silicium, entweichen kann. Damit verbleibt das gesamte Silicium auf einer Seite der Trennwand, während auf der anderen Seite nur Schlacke zu finden ist. Vorteilhaft kann auch eine Trennwand aus beispielsweise Graphit eingesetzt werden, die mit kleinen Löchern von etwa 5 mm Durchmesser versehen ist und ebenfalls nur die Schlacke, nicht aber das Silicium durchtreten läßt.

In dem durch die Trennwand vom Reaktionsraum abgetrennten Teil des Reaktionsgefäßes, der Schlackenablaufkammer, ist als Ablauf für die Schlacke beispielsweise ein Graphitrohr vorgesehen. Als besonders günstig hat es sich erwiesen, wenn das Ablaufrohr in der Höhe verstellbar ist, da sich dann äußerst einfach die gewünschte Höhe des Schlackenpegels im gesamten Reaktionsgefäß festlegen läßt.

Die aus der Schlackenablaufkammer abfließende, verbrauchte Schlacke gelangt schließlich in eine Schlackenaufbereitungskammer, wo sie zur Wiedergewinnung des gelöst enthaltenen Aluminiumoxids aufgearbeitet wird. Dabei kann durch Abkühlen das Aluminiumoxid zum Auskristallisieren gebracht und beispielsweise durch Filtration mittels eines geeigneten Graphitfilters oder aber durch Zentrifugieren abgetrennt werden. Eine andere geeignete Methode ist z.B. die Abscheidung des Aluminiumoxids auf gekühlten Platten aus beispielsweise Graphit, die in die schmelzflüssige Schlacke eingetaucht werden. Der Aluminiumoxidgehalt der verbrauchten Schlacke beträgt vor der Aufbereitung bis zu 60 Gew.%, vorzugsweise 35 bis 50 Gew.%.

Das abgetrennte Aluminiumoxid wird schließlich zur Rückgewinnung von Aluminium der Reduktion, also beispielsweise der klassischen Schmelzelektrolyse in geschmolzenem Kryolith, unterworfen. Das resultierende reine Aluminium kann dann erneut in den Reaktionszyklus eingebracht werden. Hingegen sind der Wiederverwendbarkeit der Schlacke wegen der durch die Extraktionswirkung bedingten Anreicherung von Verunreinigungen Grenzen gesetzt.

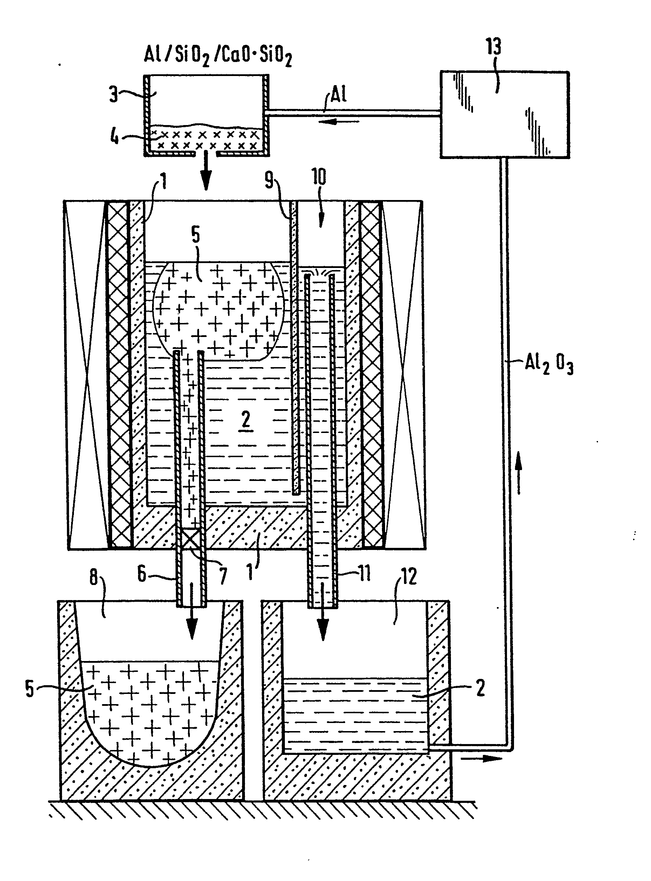

In der Figur ist der Kreisprozeß zur besseren Verdeutlichung nochmals schematisch dargestellt: In dem Reaktionsgefäß 1 wird eine schmelzflüssige Schlacke 2 aus Erdalkalisilikaten vorgelegt. In diese Schlacke wird aus einem Vorratsgefäß 3 die Reaktionsmischung 4 aus Quarz und Aluminium zuchargiert. Nach beendeter Reaktions- und Beruhigungsphase hat sich das gebildete Silicium 5 von der Schlacke abgetrennt und kann über ein Ablaufrohr 6 mit Durchflußregulans 7 in die Kokille 8 abgeführt und weiterbehandelt werden. Durch erneutes Zuchargieren von Reaktionsmischung und Schlackengrundmaterial wird nun ein Teil der verbrauchten Schlacke in die durch eine Trennwand 9 abgeteilte Schlackenablaufkammer 10 verdrängt, von wo aus sie über ein Ablaufrohr 11 in die Schlackenaufbereitungskammer 12 abfließt. Hier wird das in der Schlacke gelöst enthaltene Aluminiumoxid abgetrennt und der Schmelzelektrolyse 13 zugeführt, aus welcher zurückgewonnenes Aluminium wieder der Reaktionsmischung 4 zugeschlagen wird.

## Beispiel 1

In einem der Figur entsprechenden, offenen Graphittiegel wurden 2000 g Schlacke der Zusammensetzung 48 Gew.% Calciumoxid und 52 Gew.% Quarz bei 1550 °C niedergeschmolzen, bis der Schmelzspiegel im Reaktionsraum und im Schlackenablaufraum ausgeglichen war. Anschließend wurden nach und nach 1000 g Aluminium und 1660 g Quarzsand in den Reaktionsraum zuchargiert. Nach ca. 30 Minuten Reaktionszeit hatten sich die beiden Phasen Schlacke und entstandenes Silicium getrennt, so daß der Siliciumablauf geöffnet werden konnte und 780 g Silicium abliefen.

Sodann wurden im Abstand von 5 Minuten dreimal 333 g Aluminium und 553 g Quarz sowie zusätzlich als Lösungsmittel für entstehendes Aluminiumoxid 190 g Schlacke der Zusammensetzung 48 Gew.% Calciumoxid und 52 Gew.% Quarz je 100 g Aluminium zugegeben. Dabei lief eine durch die Höhe des Ablaufrohres festgelegte Menge der verbrauchten Schlacke aus dem Reaktionsraum ab.

Nach weiteren 30 Minuten konnte eine Menge von 860 g Silicium aus dem Reaktionsgefäß abgelassen werden; durch Zuchargieren von Reaktionsmaterial begann ein erneuter Reaktionszyklus.

Das gewonnene Silicium und die Ausgangsstoffe wiesen die folgenden Verunreinigungen auf (Angaben in Gew.ppm):

|        | Mn    | Cr   | Cu   | Ni   | Fe   | Al   | Ca   | Mg  | Ti   | B    | P    |
|--------|-------|------|------|------|------|------|------|-----|------|------|------|
| $SiO_2$ | 67,3 | <4 | 3,5 | 13 | 168 | — | — | — | 64,1 | <1 | 40,2 |
| CaO    | 197,3 | 10,2 | 6,7 | 31,7 | 546 | — | — | — | 26 | <2 | 36,7 |
| Al     | <2 | 27,5 | 11,7 | 25,8 | 362 | — | 19,6 | 20 | 19 | 2 | <5 |
| Si     | 100 | 20 | 15 | 30 | 1000 | 1000 | 500 | 60 | 35 | 0,4 | 70 |

## Beispiel 2

In einem der Figur entsprechenden, offenen Graphittiegel wurden 3900 g Schlacke der Zusammensetzung 63,5 Gew.% Bariumoxid und 36,5 Gew.% Quarz bei 1550 °C niedergeschmolzen, bis der Schmelzspiegel im Reaktionsraum und im Schlackenablaufraum ausgeglichen war. Anschließend wurden nach und nach 1000 g Aluminium und 1660 g Quarz in den Reaktionsraum zuchargiert. Nach ca. 30 Minuten Reaktionszeit hatten sich die beiden Phasen, Schlacke und entstandenes Silicium, getrennt, so daß der Siliciumablauf geöffnet werden konnte und 750 g Silicium abliefen.

Sodann wurden im Abstand von 5 Minuten dreimal 333 g Aluminium und 553 g Quarz sowie zusätzlich als Lösungsmittel für entstehendes Aluminiumoxid 390 g Schlacke der Zusammensetzung 63,5 Gew.% Bariumoxid und 36,5 Gew.% Quarz je 100 g Aluminium zugegeben. Dabei lief eine durch die Höhe des Ablaufrohres festgelegte Menge der verbrauchten Schlacke aus dem Reaktionsraum ab.

Nach weiteren 30 Minuten konnte eine Menge von 830 g Silicium aus dem Reaktionsgefäß abgelassen werden; durch Zuchargieren von Reaktionsmaterial begann ein erneuter Reaktionszyklus.

Das gewonnene Silicium und die Ausgangsstoffe wiesen die folgenden Verunreinigungen auf (Angaben in Gew.ppm):

|        | Mn   | Cr   | Cu   | Ni   | Fe   | Al   | Ca   | Mg  | Ti   | B    | P    |
|--------|------|------|------|------|------|------|------|-----|------|------|------|
| $SiO_2$ | 67,3 | <4 | 3,5 | 13 | 168 | — | — | — | 64,1 | <1 | 40,2 |
| $BaCO_3$ | 10,5 | <2 | 2,2 | 12,7 | 33 | — | — | — | 0,7 | 2 | <1 |
| Al     | 2 | 27,5 | 11,7 | 25,8 | 362 | — | 17,6 | 20 | 19 | 2 | <5 |
| Si     | 50 | 15 | 15 | 35 | 800 | · 1000 | 50 | 5 | 30 | 0,5 | 50 |

## Patentansprüche

1. Semikontinuierliches Verfahren zur Herstellung von reinem Silicium durch Reduktion von Quarz mit Aluminium, dadurch gekennzeichnet, daß in einem Reaktionsgefäß eine schmelzflüssige Erdalkalisilikatschlacke vorgelegt wird, daß in diese Schlacke chargenweise Quarz und Aluminium eingebracht werden, daß das entstandene, sich von der Schlacke getrennt abscheidende Silicium portionsweise aus dem Reaktionsgefäß abgezogen wird, und daß zur Regenerierung der das entstandene Aluminiumoxid gelöst enthaltenden Schlacke frisches Schlackenmaterial nachchargiert und eine entsprechende Menge der mit Aluminiumoxid angereicherten Schlacke aus dem Reaktionsgefäß abgeführt wird.

2. Verfahren nach Anspruch 1, dadurch gekennzeichnet, daß Quarz und Aluminium in einem Molverhältnis von mindestens 3:4 eingesetzt werden.

3. Verfahren nach Anspruch 1 oder 2, dadurch gekennzeichnet, daß der Aluminiumoxidgehalt der aus dem Reaktionsgefäß abgeführten, mit Aluminiumoxid angereicherten Schlacke 35 bis 50 Gew.% beträgt.

4. Verfahren nach einem oder mehreren der Ansprüche 1 bis 3, dadurch gekennzeichnet, daß eine Reaktionstemperatur von 1420 bis 1600 °C eingehalten wird.

5. Verfahren nach einem oder mehreren der Ansprüche 1 bis 4, dadurch gekennzeichnet, daß die Erdalkalisilikatschlacke aus Calciumsilikat oder Bariumsilikat oder Mischungen aus Calcium- und Bariumsilikat besteht.

6. Verfahren nach einem oder mehreren der Ansprüche 1 bis 5, dadurch gekennzeichnet, daß der Erdalkalisilikatschlacke höchstens 30 Mol% Erdalkalifluoride zugesetzt werden.

## Claims

1. Semicontinuous process for the production of pure silicon by reducing quartz with aluminium, characterised in that a molten alkaline earth metal silicate slag is present in a reaction vessel, quartz and aluminium are introduced batch-wise into this slag, the resulting silicon that separates out from the slag is removed in portions from the reaction vessel, and to regenerate the slag containing the dissolved aluminium oxide that has been produced, fresh slag material is added and a corresponding amount of the slag enriched with aluminium oxide is removed from the reaction vessel.

2. Process according to claim 1, characterised in that quartz and aluminium are used in a molar ratio of at least 3:4.

3. Process according to claim 1 or 2, characterised in that the aluminium oxide content of the slag enriched with aluminium oxide that is removed from the reaction vessel amounts to from 35 to 50 % by weight.

4. Process according to one or more of claims 1 to 3, characterised in that a reaction temperature of from 1420 to 1600° C is maintained.

5. Process according to one or more of claims 1 to 4, characterised in that the alkaline earth metal silicate slag consists of calcium silicate or barium silicate, or mixtures of calcium silicate and barium silicate.

6. Process according to one or more of claims 1 to 5, characterised in that the alkaline earth metal silicate slag has not more than 30 mole % of alkaline earth metal fluorides added to it.

## Revendications

1.- Procédé semi-continu pour la préparation de silicium pur par réduction du quartz par l'aluminium, procédé caractérisé en ce qu'on place dans un récipient réactionnel une scorie fondue de silicate de métal alcalinoterreux, en ce qu'on introduit dans cette scorie, en discontinu, du quartz et de l'aluminium, en ce qu'on retire du récipient réactionnel, par portions, le silicium formé qui se sépare de la scorie, et en ce que, pour régénérer la scorie contenant en solution l'oxyde d'aluminium formé, on introduit ultérieurement une scorie pauvre en oxyde d'aluminium et on retire du récipient réactionnel une quantité correspondante de la scorie enrichie en oxyde d'aluminium.

2 - Procédé selon la revendication 1 caractérisé en ce que le quartz et l'aluminium sont mis en jeu dans un rapport molaire d'au moins 3:4.

3 - Procédé selon l'une des revendications 1 et 2, caractérisé en ce que la teneur en alumine de la scorie, enrichie en alumine, qui sort du récipient réactionnel, est comprise entre 35 et 50% en poids.

4 - Procédé selon l'une quelconque des revendications 1 à 3, caractérisé en ce qu'on maintient une température réactionnelle de 1420 à 1600°C.

5 - Procédé selon l'une quelconque des revendications 1 à 4, caractérisé en ce que la scorie à base d'un silicate de métal alcalino-terreux est constituée de silicate de calcium ou de silicate de baryum ou de mélanges de silicate de calcium et de silicate de baryum.

6 - Procédé selon l'une quelconque des revendications 1 à 5, caractérisé en ce que la scorie à base d'un silicate de métal alcalino-terreux est additionnée de fluorures de métaux alcalino-terreux en une proportion d'au plus 30 % en moles.